# EUROPEAN PATENT APPLICATION

(11) **EP 0 601 622 A2**
(43) Date of publication of application: **15.06.1994**
(21) Application number: 93203235.2
(22) Date of filing: 18.11.1993
(51) Int. Cl.: F25B 39/02, B60H 1/32

(54) **U-flow evaporators for vehicle air-conditioning systems**

(30) Priority: 11.12.1992 GB 9225899
(71) Applicant: GENERAL MOTORS CORPORATION, Detroit Michigan 48202 (US)
(72) Inventor: Kadle, Prasad Shripad, L-8265 Mamer (LU)
(74) Representative: Denton, Michael John

(57) **Abstract**

A two-pass U-flow refrigerant evaporator (10) comprises a number of U-shaped tubes (12a - 12q) interconnected at the ends thereof by first and second header tubes (30,32) to form a bank of U-shaped tubes in which refrigerant fluid supplied to the first header tube (32) can pass through the U-shaped tubes into the second header tube (30). The first header tube (32) is sub-divided by a blocking member (42) to form two plenum chambers (44,46), an inlet (38) being positioned in one end (34) of the second header tube (30) and an outlet (40) being positioned in an adjacent end of the first header tube (32) in fluid communication with the second (46) plenum chamber. The inlet (38) is formed as a tubular member (48) extending inside the second header tube (30) and connects with a hollow transfer member (54) located at an opposite end of the second header tube (30) and in fluid communication with the first header tube (32) so that refrigerant fluid can pass along the tubular member (48) into said opposite end of the first header tube (32), into the first (44) plenum chamber, through the U-shaped tubes (12a - 12h) interconnecting the first plenum chamber (44) to the second header tube (30), into the second header tube (30), and through the U-shaped tubes (12i - 12q) interconnecting the second header tube (30) to the second plenum chamber (46) into the second plenum chamber (46), to leave the evaporator (10) by the outlet (40).

## Description

This invention relates to a motor vehicle air conditioning system, and more particularly to such a system containing a refrigerant evaporator of the U-flow type of tube and fin construction as shown in EP-A-0138435.

Typically, such refrigerant evaporators utilise a number of U-shaped tubes which are interconnected at the ends thereof by two adjacent header tubes so as to form a bank of the interconnected U-shaped tubes in which refrigerant fluid supplied to one of the header tubes can pass in parallel flow through the U-shaped tubes into the other header tube. These U-flow refrigerant evaporators display good refrigerant fluid pressure drop characteristics when in operation. Such a bank of U-shaped tubes is essentially rectangular in shape and typically has been housed in a substantially rectangular-shaped box-like housing within the motor vehicle air-conditioning system in the motor vehicle.

It is customary in such refrigerant evaporators to sub-divide the two adjacent header tubes into separate multi-pass manifolds which interconnect the ends of the U-shaped tubes so that the refrigerant fluid is caused to flow in several passes, each containing several of the U-shaped tubes, backwards and forwards across the evaporator from one header tube to the other header tube. In such refrigerant evaporators it is customary to have an inlet for the refrigerant fluid entering one end of one of the header tubes, and an outlet for the refrigerant fluid exiting from the other end of that header tube or the other end of the adjacent header tube, depending on how many passes are provided in the evaporator. Thus, in the customary three-pass U-flow refrigerant evaporator, the inlet for the refrigerant fluid is at one end of one of the header tubes and the outlet is at the other end of the other header tube.

Problems are now arising in the design of modern motor vehicles wherein the quantity of auxiliary equipment being provided in the motor vehicle is conflicting with the space volumes available in the motor vehicle to house such auxiliary equipment. Consequently the volume of space available to house air conditioning systems in many modern motor vehicle is so confined that, in many instances, there is insufficient room to house a rectangular-shaped refrigerant evaporator of sufficient heat transfer capacity within the vehicle, where that evaporator has a refrigerant fluid inlet positioned at one end of the evaporator and a refrigerant fluid outlet positioned at the other end of the evaporator.

An arrangement has been devised for the customary three-pass U-flow refrigerant evaporator whereby it is possible to have both the refrigerant flow inlet and the refrigerant fluid outlet positioned at the same end of the U-flow refrigerant evaporator, with the inlet positioned in one end of one header tube and the outlet positioned in the adjacent end of the other header tube. In this arrangement, the inlet is formed by a tube which extends from said one end concentrically through said one header tube to a point approximately two-thirds of the way along that header tube, so that the refrigerant fluid enters that header tube at that point. The remaining third of said one header tube thus forms the first pass of the evaporator, with the refrigerant fluid passing through the U-tubes of that first pass into the other header tube to return back along the other header tube to a middle section of the U-flow refrigerant evaporator which forms the second pass of the evaporator. In the second pass of the evaporator, the refrigerant fluid passes through the U-tubes of that second pass back into an annular space in said one header tube surrounding the inlet tube, which annular space leads to a third pass of the evaporator. The refrigerant fluid entering the third pass of the evaporator then passes through the U-tubes of that third pass to return to the other header tube, and leaves the evaporator via the outlet in said adjacent end of the other header tube.

In some instances, for a given size of U-flow refrigerant evaporator, it is not beneficial to use such an arrangement of a three-pass U-flow refrigerant evaporator to gain a high heat transfer capacity for the evaporator, because that results in an extremely high refrigerant pressure drop being produced in the three-pass evaporator during operation of the evaporator, thus raising the average temperature in the evaporator. It can be shown that, for a given size of U-flow refrigerant evaporator, it is possible to improve the heat transfer capacity for the evaporator without producing an extremely high refrigerant pressure drop by using a two-pass U-flow refrigerant evaporator instead of a three-pass U-flow refrigerant evaporator. Consequently, there is a need to produce a two-pass U-flow refrigerant evaporator having both the refrigerant flow inlet and the refrigerant fluid outlet positioned at the same end of the U-flow refrigerant evaporator, with the inlet positioned in one end of one header tube and the outlet positioned in the adjacent end of the other header tube.

A two-pass U-flow refrigerant evaporator according to the present invention comprises a number of U-shaped tubes which are interconnected at the ends thereof by two adjacent header tubes so as to form a bank of the interconnected U-shaped tubes in which refrigerant fluid supplied to one of the header tubes can pass in parallel flow through the U-shaped tubes into the other header tube, said one header tube being sub-divided by a transverse blocking member to form two separate plenum chambers, an inlet for said refrigerant fluid being positioned in one end of said other header tube and an outlet for said refrigerant fluid being positioned in an adjacent end of said one header tube in fluid communication with a second of said two plenum chambers, said inlet being formed as a tubular member which extends inside said other header tube substantially parallel to the axis of said other header tube, for substantially the length of said other header tube, and connects with a hollow transfer member which is located at an opposite end of the other header tube and is in fluid communication with an opposite end of said one header tube, so that refrigerant fluid supplied to said inlet passes along said tubular member, into said transfer member, and into said opposite end of said one header tube before passing into a first of said plenum chambers, through said U-shaped tubes interconnecting said first plenum chamber with said other header tube into said other header tube, along said other header tube in the direction of said one end thereof, and through said U-shaped tubes interconnecting said other header tube with said second plenum chamber into said second plenum chamber, to leave the evaporator by said outlet.

Preferably, the tubular member forming the inlet extends co-axially through the other header tube, and the hollow transfer member bridges said opposite ends of the header tubes, and is contained inside the evaporator by an end plate of the evaporator.

In a preferred embodiment of the present invention, the U-flow refrigerant evaporator is formed as an assembly of uniform U-flow flat tubes with air centres therebetween, the ends of which flat tubes are shaped into integral header tanks having opposed, aligned apertures therein, the evaporator being assembled as a stack of said flat tubes having the integral header tanks on the respective ends thereof in sealing contact with one another, with the opposed apertures therein aligned throughout the stack of flat tubes to form two adjacent header tubes, parallel to one another.

An embodiment of the present invention is described below, by way of example only, with reference to the accompanying drawings, in which:
Figure 1 shows a front view of a two-pass U-flow refrigerant evaporator according to an embodiment of the present invention;
Figure 2 shows a top view of the two-pass U-flow refrigerant evaporator shown in Figure 1;
Figure 3 shows a diagrammatic, exploded view of the two-pass U-flow refrigerant evaporator shown in Figure 1, with parts broken away to illustrate the construction of the U-flow evaporator and the two passes used in the evaporator, and the refrigerant flow pattern in the evaporator; and
Figure 4 shows an enlarged view, partly in section, of the top view of the two-pass U-flow refrigerant evaporator shown in Figure 2.

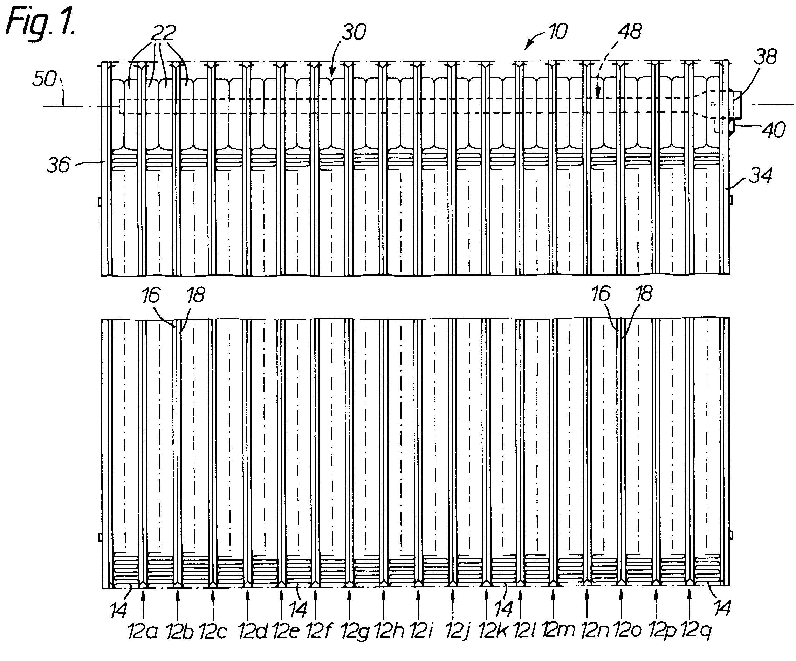

A preferred embodiment of a two-pass U-flow refrigerant evaporator 10 according to the present invention is shown in Figures 1 to 4 of the accompanying drawings. As can be seen in Figure 1, the U-flow refrigerant evaporator 10 comprises an assembly of uniform U-flow flat tubes 12, with air centres 14 interposed therebetween.

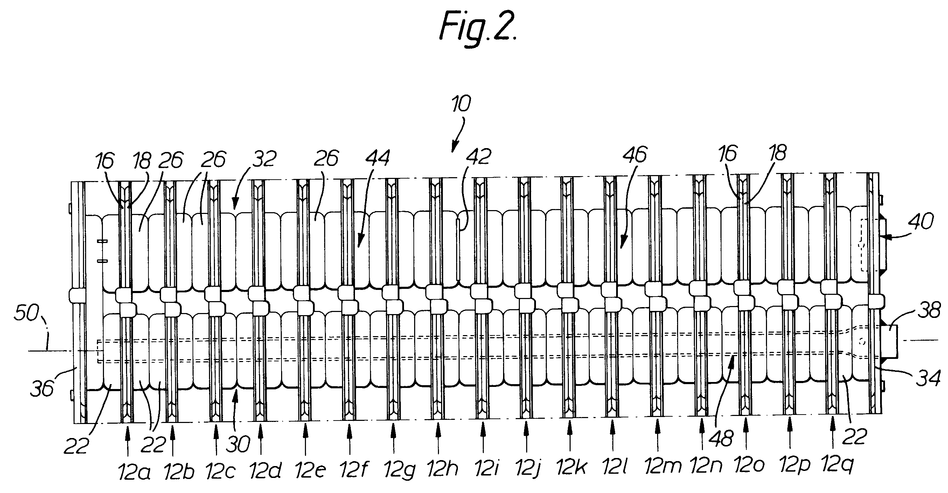

The construction of the U-flow evaporator 10 is shown in more detail in Figures 2, 3 and 4 of the accompanying drawings, from which it can be seen that the evaporator 10 is comprised of uniform U-flow flat tubes 12, each of which is fabricated from a pair of mating core plates exemplified by inner core plate 16 and outer core plate 18 shown in detail in Figures 2 to 4. The core plates 16, 18 are made from stampings of thin aluminium sheet or other suitable heat-transfer material, and are generally rectangular in plan view with rounded corners. The upper ends of the plates 16, 18 are each formed with an inlet opening 20 surrounded by a generally conical and truncated apertured protruberance 22, and an outlet opening 24 surrounded by a generally conical and truncated apertured protruberance 26. The generally conical and truncated apertured protruberances 22, 26 are connected to one another, as shown in Figures 1 and 2, to form a pair of integral header tubes 30, 32 for flow of refrigerant in either liquid phase or liquid/vapour phase through the flat tubes 12. The U-flow evaporator 10 shown in Figures 1 and 2 is made up of a total of seventeen uniform identical tubes 12a to 12q brazed together, a first end plate 34, and a second end plate 36.

The first end plate 34 of the U-flow evaporator 10 has an inlet 38 into the integral header tube 30 at one end of the header tube 30, and an outlet 40 from the integral header tube 32 at an adjacent end of the header tube 32, as shown in Figure 2. Moreover, as also shown in Figure 2, there is a transverse blocking member 42 located in the integral header tube 32 between flat tubes 12h and 12i, which transverse blocking member 42 seals the respective outlet openings in flat tubes 12h and 12i, so as to divide the integral header tube 32 into two separate plenum chambers 44, 46, the first plenum chamber 44 being made up of the respective apertured protruberances 26 of the eight flat tubes 12a to 12h, forming a first pass of the U-flow evaporator 10, and the second plenum chamber 46 being made up of the respective apertured protruberances 26 of the nine flat tubes 12i to 12q, forming a second pass of the U-flow evaporator 10.

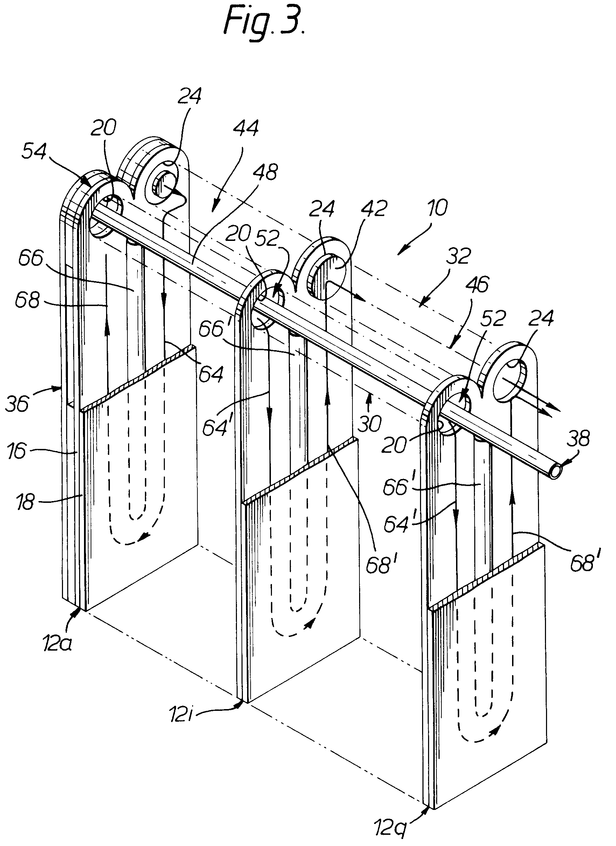

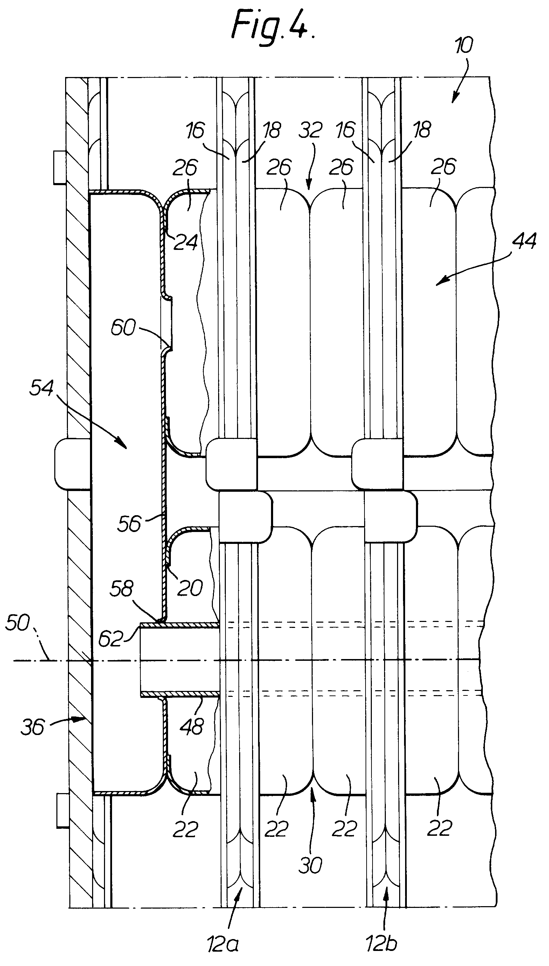

The inlet 38 is formed as a tubular member 48 which extends inside the integral header tube 30 substantially parallel to, and co-axial with, a longitudinal axis 50 of the integral header tube 30, for substantially the length of the integral header tube 30, passing concentrically through all of the inlet openings 20 of the respective flat tubes 12a to 12q in the process. As can be seen in Figure 3, the tubular member has a diameter less than the diameter of each of the inlet openings 20 in the flat tubes 12, so defining an annular opening 52 in each of the respective inlet openings 20 through which refrigerant fluid can flow from one flat tube to the next flat tube along the integral header tube 30. The tubular member 48 connects with a hollow transfer member 54 which is located at an opposite end of the integral header tube 30 and is in fluid communication with an opposite end of the integral header tube 32, so that refrigerant fluid supplied to said inlet 38 passes along said tubular member 48, into said transfer member 54, and into the opposite end of the integral header tube 32. As can be seen in more detail in Figure 4, the hollow transfer member 54 forms part of the second end plate 36, the truncated apertured protruberances 22, 26 of the plate 16 of flat tube 12a being brazed to one wall 56 of the hollow transfer member 54. The wall 56 has two circular apertures 58,60 formed therein which are co-axially placed with respect to the longitudinal axes of the integral header tubes 30,32. Circular aperture 58 has a diameter such that the tubular member 48 is a push fit therein, and, as shown in Figure 4, the tubular member 48 terminates in an open end 62 adjacent the wall 56. The tubular member 48 is sealingly secured to the wall 56 by brazing, so as to prevent any bypass of refrigerant fluid leaving the open end 62 of the tubular member 48 into the inlet opening 20 of the flat tube 12a. The circular aperture 60 in the wall 56 has a diameter at least as great as the diameter of aperture 58, and freely permits the flow therethrough of refrigerant fluid entering the the hollow transfer member 54 through the open end 62 of the tubular member 48.

Refrigerant fluid passing through the circular aperture 60 in the wall 56 of the hollow transfer member 54 enters the first plenum chamber 44 of the integral header tube 32, and then passes through the U-shaped flat tubes 12a to 12h interconnecting the first plenum chamber 44 with the integral header tube 30 and into the annular openings 52 of the integral header tube 30, thus traversing the first pass of the U-flow evaporator 10. As can be seen in Figure 3, the flow of refrigerant in each U-shaped flat tube 12a to 12h, exemplified by U-shaped flat tube 12a in Figure 3, occurs through a passage 64 formed in the tube 12a on one side of a raised divider rib 66 formed on each of the core plates 16, 18 forming the tube 12a. The divider rib 66 is located in the centre of the tube 12a to form the flow passage 64 and a second flow passage 68 which communicates with the integral header tube 30.

The refrigerant fluid then passes along the integral header tube 30 in the direction of the first end plate 34 through the annular openings 52 in the U-shaped flat tubes 12i to 12q, through the U-shaped flat tubes 12i to 12q interconnecting the integral header tube 30 with the second plenum chamber 46, and into the second plenum chamber 46, thus traversing the second pass of the U-flow evaporator 10. In each of the U-shaped flat tubes 12i to 12q, as exemplified by U-shaped flat tubes 12i and 12q shown in Figure 3, flow of refrigerant from the header tube 30 occurs through a passage 64' formed in each tube 12i to 12q on one side of a raised divider rib 66' formed on each of the core plates 16,18 forming each tube 12i to 12q. The divider rib 66' is located in the centre of each tube 12i to 12q to form the flow passage 64' and a second flow passage 68' which communicates with the second plenum chamber 46 of the integral header tube 32. The annular openings 52 and the outlet openings 24 of all of the tubes 12i to 12q are unobstructed, thus allowing free flow of the refrigerant fluid in the integral header tube 30 through all of the tubes 12i to 12q into the integral header tube 32. The refrigerant fluid finally leaves the U-flow evaporator 10 by the outlet 40 in the first end plate 34.

In an alternative embodiment, the hollow transfer member could be formed as a separate item and be attached to the second end plate of the evaporator, instead of forming part of the end plate. Similarly, it is not essential that the tubular inlet member is arranged co-axially within the integral header tube, provided that there is free access for refrigerant fluid flow through the inlet openings in the integral header tube around the tubular inlet member.

As will be apparent from the above, it is possible to provide an effective means of obtaining a two-pass U-flow refrigerant evaporator of a motor vehicle air conditioning system in which the inlet and the outlet to the evaporator are both situated at the same end of the evaporator, the evaporator providing a high heat transfer capacity without the creation of a high pressure drop across the evaporator during the operation of the evaporator. Moreover, it is possible to provide a U-flow refrigerant evaporator of a motor vehicle air conditioning system which is economically and readily manufactured from a number of standard U-flow evaporator plates, already manufactured in bulk for U-flow evaporator cores for other air-conditioning purposes. Thus a U-flow refrigerant evaporator as disclosed in Figures 1 to 4 can readily be assembled from standard, commercially-available U-flow evaporator plates as produced and manufactured by the applicants, said evaporator plates having heights of 204.4 mm (approximately 8 ins.), 234.3 mm (approximately 9 ins.) and 249.2 mm (approximately 10 ins.), with a minimum of extra parts being required.

The disclosures in British patent application no. 9225899.5 from which this application claims priority, and in the abstract accomanying the application are incorporated herein by reference.

## Claims

1. A multi-pass U-flow refrigerant evaporator comprising a number of U-shaped tubes (12) interconnected at the ends thereof by first and second adjacent header tubes (30,32) to form a bank of interconnected U-shaped tubes in which refrigerant fluid supplied to the first header tube (32) can pass through the U-shaped tubes into the second header tube (30), the first header tube being sub-divided by a transverse blocking member (42) to form first and second separate plenum chambers (44,46), an inlet (38) for refrigerant fluid being positioned in one end of the second header tube and an outlet (40) for refrigerant fluid being positioned in an adjacent end of the first header tube in fluid communication with the second plenum chamber, the inlet including a tubular member (48) extending inside the second header tube substantially parallel to the axis of the second header tube and connecting with a hollow transfer member (54) located at an opposite end of the second header tube and in fluid communication with an opposite end of the first header tube; refrigerant fluid supplied in use to the inlet passing along the tubular member, into the transfer member and into the opposite end of the first header tube before passing into the first plenum chamber through the U-shaped tubes interconnecting the first plenum chamber with the second header tube into the second header tube, along the second header tube in the direction of said one end thereof and through the U-shaped tubes interconnecting the second header tube with the second plenum chamber into the second plenum chamber, to leave the evaporator by the outlet.

2. A multi-pass U-flow refrigerant evaporator according to claim 1, in which the tubular member (48) extends co-axially through the second header tube.

3. A multi-pass U-flow refrigerant evaporator according to claim 1 or 2, in which the hollow transfer member (54) bridges the opposite ends of the header tubes and is contained inside the evaporator by an end plate (36) of the evaporator.

4. A multi-pass U-flow refrigerant evaporator according to any one of claims 1 to 3, in which the U-flow refrigerant evaporator is formed as an assembly of uniform U-flow flat tubes (12) with air centres therebetween, the ends of which flat tubes are shaped into integral header tanks having opposed, aligned apertures (20,24) therein, the evaporator being assembled as a stack of flat tubes having the integral header tanks on the respective ends thereof in sealing contact with one another, with the opposed apertures therein aligned throughout the stack of flat tubes to form two adjacent header tubes, parallel to one another.
